# EUROPÄISCHE PATENTSCHRIFT

(11) **EP 3 165 529 B1**
(45) Veröffentlichungstag und Bekanntmachung des Hinweises auf die Patenterteilung: **05.09.2018**
(21) Anmeldenummer: 16197718.6
(22) Anmeldetag: 08.11.2016
(51) Int. Cl.: C07F 9/145

(54) **VERFAHREN ZUR REDUZIERUNG DES CHLORGEHALTS VON BISPHOSPHITEN MIT 2,4-DIMETHYLPHENYL-EINHEITEN**
METHOD FOR REDUCING THE CHLORINE CONTENT OF BISPHOSPHITES WITH 2,4-DIMETHYLPHENYL UNITS
PROCÉDÉ DE RÉDUCTION DE LA TENEUR EN CHLORE DANS DES BIS-PHOSPHITES AVEC DES UNITÉS DE 2,4 DIMETHYLPHENYL

(30) Priorität: 09.11.2015 EP 15193605; 09.11.2015 EP 15193607; 02.08.2016 WO PCT/EP2016/068375
(43) Veröffentlichungstag der Anmeldung: 10.05.2017
(73) Patentinhaber: Evonik Degussa GmbH, 45128 Essen (DE)
(72) Erfinder: FRANKE, Robert, 45772 Marl (DE)

(56) Entgegenhaltungen:
- WO-A1-2012/095255
- DE-A1- 19 717 359
- DE-A1-102014 202 500

## Beschreibung

Die Erfindung betrifft ein Verfahren zur Reduzierung des Chlorgehalts von Bisphosphiten mit 2,4-Dimethylphenyl-Einheiten.

Da Phosphitliganden letztlich aus PCl₃ gebildet werden, müssen besondere Anstrengungen unternommen werden, um möglichst chloridarme Liganden bereitzustellen. Bei der Hydroformylierung höherer Olefine sind im Regelfall höhere Temperaturen erforderlich, die einen beschleunigten Abbau des Liganden bewirken. Dies bedeutet, dass in einem kontinuierlich laufenden Hydroformylierungsprozess der stetige Abbau von Liganden durch Nachdosierung von frisch-Ligand kompensiert werden muss. Wenn nun der Ligand Spuren an Chlorid enthält, bedeutet das, dass sich Chlorid allmählich im Reaktor akkumuliert, da Chlorid aus dem Reaktor praktisch nicht ausgetragen wird. Mit steigendem Chloridgehalt steigt folglich die Gefahr der Korrosion, u.a. der Spannungsrisskorrosion, erheblich an. Da es bei der Hydroformylierung als Nebenreaktion auch zu einer Aldolkondensation kommen kann, wobei Wasser gebildet wird, steigt in Kombination das Risiko einer Korrosion erheblich. Es ist daher wichtig, einen Herstellungs- und Aufreinigungsprozess für Phosphitliganden zu entwickeln, der die entsprechenden Liganden mit geringem Chloridgehalt bereitstellt.

Die Synthese phosphorhaltiger Liganden ist in der Literatur mehrfach beschrieben. Einen guten Überblick findet man in: "Phosphorous(III) Ligands in Homogeneous Catalysis - Design and Synthesis" von Paul C.J. Kamer und Piet W.N.M. van Leeuwen; John Wiley and Sons, 2012.

Der Chloridgehalt lässt sich analytisch einfach bestimmen; zum Beispiel durch wässrige Titration. Weitreichender ist die Bestimmung des Gesamtchlorgehalts, der neben den Chloriden auch anderweitig gebundenes Chlor umfasst. Ein Abstellen auf den Gesamtchlorgehalt ist auch insoweit sachdienlich, als nicht ausgeschlossen werden kann, dass auch anderweitig gebundenes Chlor den Reaktor zu schädigen vermag. Bei der Bemessung der Grenzwerte für Gesamtchlor bleibt aber der Chloridanteil maßgeblich.

Ein geeignetes Verfahren zur Bestimmung des Gesamtchlorgehalts ist die Verbrennung nach Wickbold mit Probenvorbereitung nach DIN 51408 und Messung per lonenchromatographie nach DIN EN ISO 10304.

In der Patentliteratur sind Methoden zur Reduktion des Gesamtchlorgehalts von Organophosphor-Liganden in Anschluss an die eigentliche Synthese bekannt:
Die Schrift EP 0 285 136 beansprucht ein Verfahren zur Reinigung von tertiären Organophosphiten von fünfwertigen Organophosphor-Verbindungen, die als Nebenprodukte der Synthese oder auch als Abbau- bzw. Hydrolyseprodukte der tertiären Organophosphite entstehen. Das Verfahren sieht eine Behandlung des gelösten verunreinigten Organophosphits mit Wasser bei erhöhter Temperatur in Gegenwart einer Lewis-Base vor. Als Lewis-Basen werden anorganische Salze (Carbonate, Hydroxide, Oxide), tertiäre Amine und Polymere, die Amin-Gruppen tragen, eingesetzt. Ein Nachteil des beanspruchten Verfahrens liegt in der Behandlung mit Wasser. Nicht nur die zu entfernenden Verunreinigungen, sondern auch die tertiären Organophosphite selbst reagieren unter den genannten Bedingungen, so dass, je nach Hydrolysestabilität der Organophosphite, ein Teil des Wertprodukts verloren geht.

In DE 10 2014 202500 A1 wird ein Verfahren zur Reduzierung des Chlorgehalts in einem Organobisphosphit beschrieben. Hierbei kommen zwei Lösungsmittel und zwei Basen zum Einsatz.

In WO 2012/095255 A1 wird ein Verfahren zur Aufreinigung von Biphephos beschreiben. Die Verbindung wird hierbei in einem bestimmten Lösungsmittel/Lösungsmittelgemisch umkristallisiert.

In DE 197 17 359 A1 werden Bisphosphitverbindungen, Verfahren zu deren Herstellung, sowie Hydroformylierungsverfahren unter Einsatz dieser Verbindungen beschrieben.

Aufgabe der vorliegenden Erfindung war es nun, ein Aufreinigungsverfahren für Organobisphosphite zu entwickeln, bei dem der Chlorgehalt reduziert wird, ohne dass dies Verfahren die zuvor beschriebenen Nachteile aufweist.

Insbesondere bestand die Aufgabe darin, mit dem Verfahren Organobisphosphite auf einen Chlorgehalt von weniger als 500 ppm im Organobisphosphite aufzureinigen. Vorzugsweise sollte der Chlorgehalt auf weniger als 400 ppm im Organobisphosphit, und besonders bevorzugt auf weniger als 300 ppm im Organobisphosphit reduziert werden. Die angegebenen Chlorgehalte verstehen sich als Gesamtchlorgehalte.

Das verunreinigte Organobisphosphit kann nämlich organische Chloride und/oder anorganische Chloride enthalten. Organische Chloride enthalten mindestens ein Kohlenstoffatom, währenddessen anorganische Chloride keinen Kohlenstoff aufweisen. Verschmutzungen des Organophosphorprodukts durch die folgenden Chloride sind besonders wahrscheinlich, da diese chlorhaltigen Verbindungen entweder bei der Synthese von Organophosphorverbindungen benötigt werden oder als Nebenprodukte unvermeidlich anfallen: Phosphortrichlorid, Chlorophosphite, Dichlorophosphite, Hydrochloride von Aminen, Hydrochloride von Alkalimetallen, Chloride von Erdalkalimetallen, chlorhaltige Säuren erhältlich aus der Hydrolyse von Phosphortrichlorid.

Deshalb weist das verunreinigte Organobisphosphit in der Regel mindestens eines der aufgezählten Chloride auf.

Des Weiteren soll das Reinigungsverfahren aufgrund der Hydrolyseinstabilität der Organobisphosphite auf die Verwendung von Wasser verzichten.

Gelöst wird diese Aufgabe durch ein Verfahren gemäß Anspruch 1.

Gegenstand der vorliegenden Erfindung ist ein Verfahren zur Reduktion des Chlorgehalts in einem Organobisphosphit der allgemeinen Formel (I): 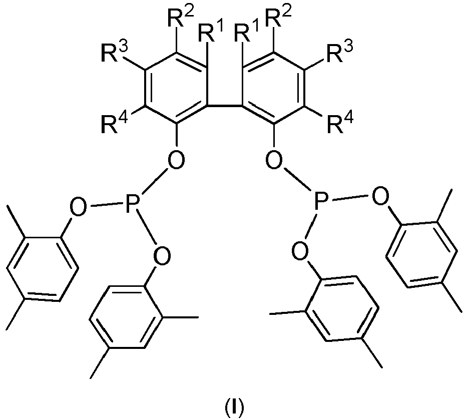 wobei
R¹, R², R³, R⁴ ausgewählt sind aus: -H, -(C₁-C₁₂)-Alkyl, -O-(C₁-C₁₂)-Alkyl, wobei die genannten Alkylgruppen wie folgt substituiert sein können: substituierte -(C₁-C₁₂)-Alkylgruppen und substituierte -O-(C₁-C₁₂)-Gruppen können in Abhängigkeit von ihrer Kettenlänge, einen oder mehrere Substituenten aufweisen; die Substituenten sind unabhängig voneinander ausgewählt unter -(C₃-C₁₂)-Cycloalkyl, -(C₃-C₁₂)-Heterocycloalkyl, - (C₆-C₂₀)-Aryl, Cyano, Formyl, Acyl oder Alkoxycarbonyl,
umfassend die Verfahrensschritte:
a) Lösen des Organobisphosphits in Acetonitril und Triethylamin oder Acetonitril und Pyridin bei einer Temperatur T zwischen Raumtemperatur und dem Siedepunkt der Lösung, wobei das Lösen optional die Abtrennung etwaiger unlöslicher Bestandteile mitumfasst;
b) Rühren der Lösung aus Schritt a) bei der Temperatur aus Schritt a) ± 10 °C,
c) Abkühlen der Lösung aus Schritt b) um mehr als 10 °C unter Bildung einer Suspension oder Emulsion;
d) Halten der Suspension oder Emulsion aus Schritt c) bei der Temperatur aus Schritt c) ± 10 °C,
e) Separieren der Phasen der Suspension oder Emulsion aus Schritt d).

Im Rahmen dieser Erfindung wird unter einer Lösung in den Schritten a) bis c) auch eine solche verstanden, welche vom menschlichen Augen als trüb wahrgenommen wird, deren als Trübung wahrgenommenen Bestandteile jedoch durch einen G3-Quarzglasfilter (G3 Fritte) nicht abgetrennt werden können.

In dem erfindungsgemäßen Verfahren wird ein chloridhaltiges Roh-Organobiphosphit, also eine Mischung aus Organobiphosphit und unerwünschten Komponenten umfassend Chloride eingesetzt. Löst sich dieses Roh-Organobiphosphit im Schritt a) des erfindungsgemäßen Verfahrens nicht vollständig auf, so ist es bevorzugt, unlösliche Bestandteile, beispielsweise mittels eines Quarzglasfilters, von der Lösung abzutrennen, bevor die weiteren Schritte des Verfahrens durchlaufen werden.

Unabhängig voneinander stehen folgende Varianten des Verfahrens nebeneinander: In einer Variante des Verfahrens steht R¹ für -H. In einer Variante des Verfahrens steht R³ für -H. In einer Variante des Verfahrens ist R² ausgewählt aus: -Me, -tBu, -OMe. In einer Variante des Verfahrens steht R² für -OMe. In einer Variante des Verfahrens ist R⁴ ausgewählt aus: -Me, -tBu, -OMe. In einer Variante des Verfahrens steht R⁴ für -tBu.

In einer besonders bevorzugten Ausführungsform des erfindungsgemäßen Verfahrens weist das Organobisphosphit die Formel (1) auf:

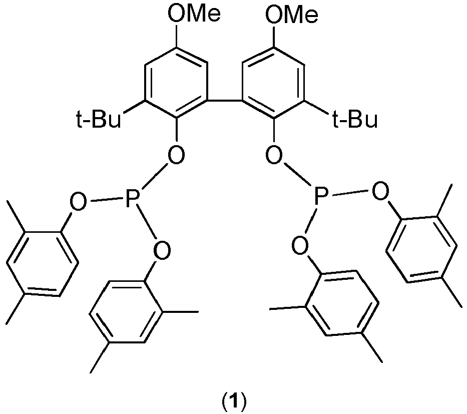

Mit Vorzug wird als Lösungsmittel Acetonitril eingesetzt. Wird ein Lösungsmittelgemisch verwendet, enthält dieses vorzugsweise Acetonitril, mit Vorzug zu mindestens 25 Vol-%, dazu bevorzugt zu mindestens 50 Vol-% und insbesondere zu mindestens 75 Vol-% oder zu mindestens 90 Vol-% des Lösungsmittelgemisches. Bei diesen Berechnungen wird das optional einsetzbare Amin nicht zu den Lösungsmitteln gezählt. Das zweite oder eventuell dritte Lösungsmittel in dem im Schritt a) eingesetzten Lösungsmittelgemisch wird vorzugsweise ausgewählt aus der Gruppe der gesättigten Kohlenwasserstoffe. Bevorzugt wird ein Lösungsmittelgemisch umfassend Acetonitril und Pentan, Hexan oder Heptan eingesetzt.

In einer bevorzugten Ausführungsform des erfindungsgemäßen Verfahrens wird eine solche Menge an Lösungsmittel(-gemisch) eingesetzt, dass sich im Schritt a) bei der Temperatur T eine gesättigte Lösung bildet.

Die Temperatur T im Schritt a) liegt vorzugsweise weniger als 40 °C, bevorzugt weniger als 35 °C, weiter bevorzugt weniger als 30 °C, weniger als 25 °C oder weniger als 20 °C, mit besonderem Vorzug weniger als 10 °C und insbesondere weniger als 5 °C unterhalb des Siedepunktes der Lösung, wobei mit Vorzug eine gesättigte Lösung des Roh-Organobiphosphits hergestellt wird. Bevorzugt siedet die Lösung im Schritt a) nicht.

Diese Lösung wird - nach der bereits beschriebenen, optionalen Abtrennung unlöslicher Bestandteile - im Schritt b) bei einer um maximal 10 °C von der Temperatur im Schritt a) abweichenden Temperatur gerührt. Vorzugsweise weicht die Temperatur im Schritt b) um weniger als ± 5 °C oder weniger als ± 2 °C von der Temperatur T im Schritt a) ab. Bei dieser Temperatur wird die Lösung 10 Minuten bis 12 Stunden, bevorzugt 15 Minuten bis 5 Stunden, weiter bevorzugt 20 Minuten bis 2 Stunden gerührt.

Vorzugsweise wird in dem Schritt a) ein Amin in einer Menge von 0,01 bis 10 Vol-% bezogen auf die Menge des eingesetzten Lösungsmittels zugesetzt. In einer bevorzugten Ausführungsform des erfindungsgemäßen Verfahrens werden 0,05 bis 5 Vol-%, weiter bevorzugt 0,1 bis 1,5 Vol-%, besonders bevorzugt 0,15 bis 1,0 Vol-% und insbesondere 0,17 bis 0,5 Vol-% Amin, bezogen auf die Menge des eingesetzten Lösungsmittels eingesetzt, ohne dass das Amin selber zu den Lösungsmitteln gezählt wird.

Vorzugsweise in Kombination damit, liegt das Molverhältnis des Amins zum eingesetzten Roh-Organobiphosphit bei 2:1 bis 1:8, vorzugsweise bei 1:1 bis 1:6 und insbesondere bei 1:2 bis 1:4.

Im Verfahrensschritt c) wird die Lösung aus dem Schritt b) um mehr als 10 °C abgekühlt wobei in Abhängigkeit von den Verunreinigungen innerhalb des Roh-Organobiphosphits sowie den physikalischen Eigenschaften des Organobiphosphits selbst, eine Suspension oder Emulsion gebildet wird. Vorzugsweise wird die Lösung zur Bildung einer Suspension oder Emulsion im Schritt c) auf -15 °C bis 35 °C, bevorzugt auf -10 °C oder -5 °C bis 30°C und insbesondere auf 0 °C bis 25° C abgekühlt. Mit besonderem Vorzug wird die Lösung im Schritt c) auf Raum-/oder Umgebungstemperatur abgekühlt. Während die Raumtemperatur dabei meist bei 20 bis 25 °C liegen sollte, ist die Umgebungstemperatur von Jahreszeit und Klimazone abhängig und in größerem Rahmen variabel.

Nachfolgend wird die Suspension oder Emulsion im Schritt d) bei einer Temperatur, welche um maximal 10 °C, vorzugsweise um maximal 5 °C von der Temperatur im Schritt c) abweicht, gehalten. Die Haltedauer liegt dabei vorzugsweise bei weniger als 48 Stunden, bevorzugt bei weniger als 24 Stunden und insbesondere bei weniger als 18 oder 12 Stunden.

Vorzugsweise wird die Suspension oder Emulsion im Schritt c) oder d) bewegt, beispielsweise gerührt. Alternativ kann es bevorzugt sein und die Trennbarkeit der Phasen im Schritt e) erleichtern, wenn die Lösung und/oder Suspension oder Emulsion in einem oder mehreren der Schritte c) und d) nicht bewegt wird.

Im anschließenden Verfahrensschritt werden die Phasen der Suspension oder Emulsion separiert. Im Falle einer Emulsion wird nach erfolgter Phasentrennung vorzugsweise abdekantiert, auch eine Phasentrennung mittels Zentrifugation ist möglich. Wurde im Verfahrensschritt c) eine Suspension gebildet, wird der Feststoff vorzugsweise mittels Filter, mit oder ohne Filterhilfsmittel, mittels einer Membran, mittels Filterkerzen, mittels Filtersäcken, mittels Filtertüchern oder mittels Quarzglasfilter abgetrennt. Wie üblich können die festen Bestandteile bevorzugt mittels des eingesetzten Lösungsmittels oder Lösungsmittelgemisches oder mit einem anderen Lösungsmittel nachgewaschen werden.

In einem optionalen anschließenden Verfahrensschritt e) wird der Feststoff der Suspension bzw. die untere Phase der getrennten Emulsion getrocknet.

Mittels des erfindungsgemäßen Verfahrens wird bevorzugt der Gesamtchlorgehalt des gereinigten Organobisphosphits auf 10 ppm bis 10.000 ppm, vorzugsweise auf 10 ppm bis 1.000 ppm, weiter bevorzugt auf unter 500 ppm, insbesondere auf unter 400 ppm oder unter 300 ppm reduziert.

Ein bevorzugter Gegenstand der vorliegenden Erfindung ist ein Verfahren zur Reduktion des Chlorgehalts in dem Organobisphosphit der Formel (1): 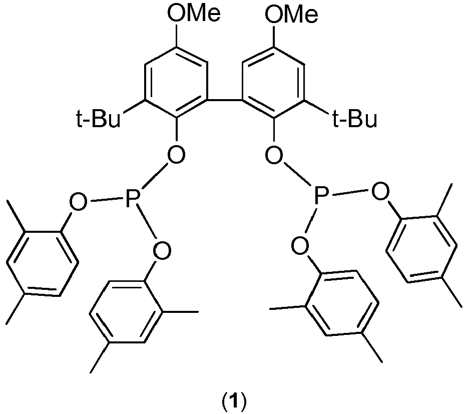 umfassend die Verfahrensschritte:
a) Lösen des Organobisphosphits in Acetonitril und Triethylamin oder Acetonitril und Pyridin, bei einer Temperatur T, welche weniger als 20 °C unterhalb des Siedepunktes der Lösung liegt, wobei das Lösen optional die Abtrennung etwaiger unlöslicher Bestandteile mitumfasst;
b) Rühren der Lösung aus Schritt a) bei der Temperatur aus Schritt a) ± 10 °C, vorzugsweise T ± 5 °C,
c) Abkühlen der Lösung aus Schritt b) um mehr als 10 °C, vorzugsweise auf Umgebungstemperatur, unter Bildung einer Suspension oder Emulsion;
d) Halten der Suspension oder Emulsion aus Schritt c) bei der Temperatur aus Schritt c) ± 10 °C, vorzugsweise ± 5 °C,
e) Separieren der Phasen der Suspension oder Emulsion aus Schritt d),
wobei im Schritt a) Amin, vorzugsweise in einem Molverhältnis des Amins zum eingesetzten Roh-Organobiphosphit von 2:1 bis 1:8, zugesetzt wird.

Im Folgenden soll die Erfindung anhand von Ausführungsbeispielen näher erläutert werden.

### Beispiele:

### Allgemeine Arbeitsvorschriften

Alle nachfolgenden Präparationen wurden mit Standard-Schlenk-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).

Phosphortrichlorid (Aldrich) wurde vor dem Einsatz unter Argon destilliert. Alle präparativen Arbeiten erfolgten in ausgeheizten Gefäßen. Die Charakterisierung der Produkte erfolgte mittels NMR-Spektroskopie. Chemische Verschiebungen (δ) werden in ppm angegeben. Die Referenzierung der ³¹P-NMR-Signale erfolgte gemäß: SR_{31P} = SR_{1H} * (BF_{31P} / BF_{1H}) = SR_{1H}* 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84).

Die Aufnahme von Kernresonanzspektren erfolgte an Bruker Avance 300 bzw. Bruker Avance 400, die gaschromatografische Analyse an Agilent GC 7890A, die Elementaranalyse an Leco TruSpec CHNS und Varian ICP-OES 715, und die ESI-TOF Massenspektrometrie an Thermo Electron Finnigan MAT 95-XP und Agilent 6890 N/5973 Geräten.

### Reaktionsgleichung Synthese Verbindung (1)

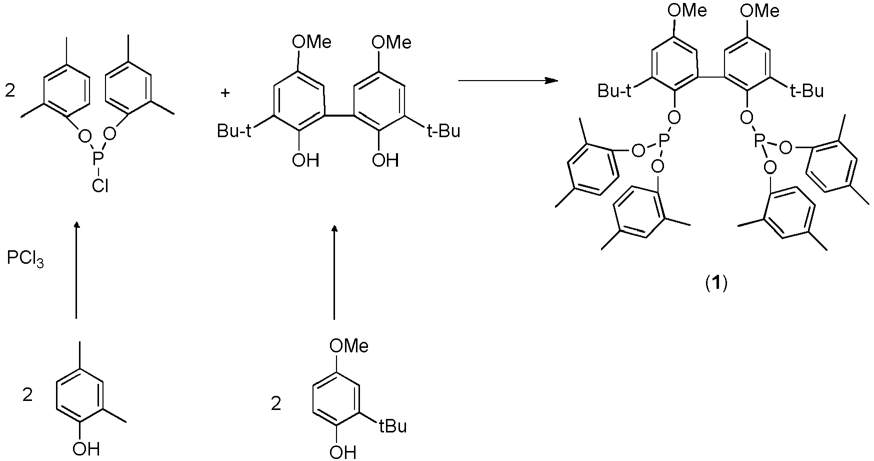

### Beispiel 1: Herstellung von Bis-(2,4-dimethylphenyl)-chlorophosphit

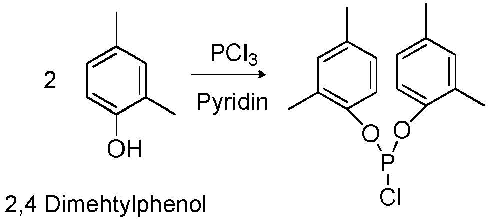

In einem sekurierten 1200 ml Glasreaktor, mit Tropftrichter versehen, wurden 50 g PCl₃ (0,363 mol) und 86 g Pyridin (1,076 mol) in 380 ml getrocknetem Toluol vorgelegt. Die milchig-gelbe PCl₃/Pyridin-Lösung wurde unter Rühren auf -7 °C heruntergekühlt. Dann wurde in den Tropftrichter 86 ml 2,4-Dimethylphenol (0,720 mol) hinzugegeben und in 380 ml getrocknetem Toluol gelöst. Zur Durchführung wurde die Phenol/Toluol-Lösung langsam und stetig zur PCl₃/Pyridin-Lösung hinzugetropft. Über Nacht wurde die Reaktionsmischung unter Rühren auf Raumtemperatur gebracht.
Zur Aufarbeitung wurde das entstandene Hydrochlorid abfiltriert und mit 60 ml getrocknetem Toluol nachgespült und die entstandene Mutterlauge unter vermindertem Druck bis zur Trockene eingeengt.

Zur weiteren Aufarbeitung wurde die Rohlösung destilliert. Hierfür wurde ein Spitzkolben mit der Rohlösung befüllt, darauf kam eine kurze Destillationsbrücke ohne Kühlmantel. An der oberen Öffnung wurde das Thermometer platziert, am anderen Ende wurde eine Spinne mit vier weiteren Spitzkolben befestigt. Anschließend wurde diese Apparatur mit einer Kühlfalle verbunden und von dort aus mit der Hochvakuumpumpe. Der Spitzkolben mit dem zu destillierenden Rohliganden wurde mittels Ölbad erwärmt. Zuerst wurde der Vorlauf bei einer Kopftemperatur von 25 - 30 °C abgenommen. Anschließend wurde die Spinne weiter gedreht und bei einer Kopftemperatur von 140 °C wurde der Hauptlauf abgenommen. Als keine Tropfen mehr im Hauptlauf ankamen, wurde die Destillation abgestellt, die Pumpe runtergefahren und der Hauptlauf in dem entsprechenden Spitzkolben entnommen, verschlossen und analysiert.

Ergebnis:
Gesamtmasse: 56,7 g (46% Ausbeute)

### Beispiel 2: Herstellung von 3,3'-di-tert-butyl-5,5'-dimethoxy-[1,1'-biphenyl]-2,2'-diyltetrakis(24-dimethylphenyl)bisphosphit (Verbindung (1)

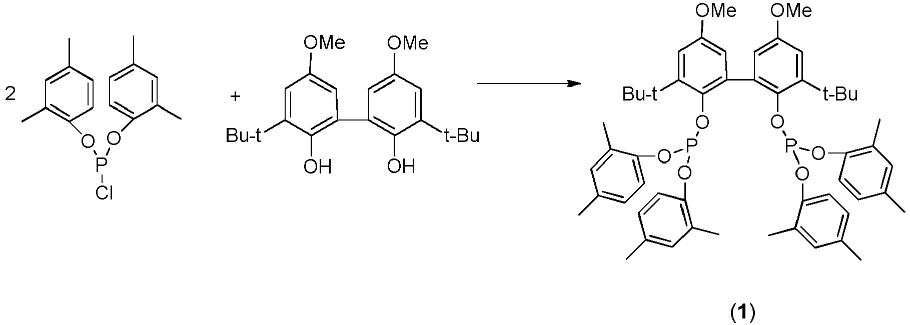

In einem 1000 mL Schlenkkolben wurden zu 51,86 g (0,153 mol) Bis-(2,4-dimethylphenyl)-chlorophosphit unter Rühren bei Raumtemperatur 260 ml getrocknetem Acetonitril zugegeben und das Chlorophosphit aufgelöst.
In einen zweiten 250 ml Schlenkkolben wurden 20,1 g (0,056 mol) 3,3'-Di-tert.-butyl-5,5'-dimethoxy-[1,1'-biphenyl]-2,2'diol mit 12,4 ml (0,153 mol) Pyridin und 155 ml getrocknetem Acetonitril versetzt. Nun wurde die Chlorophosphitlösung im Schlenkkolben auf 0 °C abgekühlt. Anschließend wurde langsam unter kräftigem Rühren die Biphenol/Pyridin-Lösung zugetopft. Die Reaktionsmischung wurde ca. 3 h bei dieser Temperatur gehalten und dann ganz langsam über Nacht auf Raumtemperatur gebracht.
Dann wurde die Suspension abfiltriert, mit 30 ml Acetonitril gut nachgewaschen und getrocknet.

Ergebnis:
Masse: 44,01 g (Ausbeute: 85%)

### Beispiele zur Chlorreduzierung

Der wie oben beschrieben hergestellte Rohligande soll nun im Folgenden weiter aufgereinigt werden, um den Chlorgehlat zu reduzieren.

Hierzu wurde 3,3'-di-tert-butyl-5,5'-dimethoxy-[1,1'-biphenyl]-2,2'-diyltetrakis(2,4-dimethylphenyl)bisphosphit (**1**) auf verschiedenen Wegen aufgereinigt.

Die angegebenen Chlorgehalte verstehen sich als Gesamtchlorgehalte.
Der Gesamtchlorgehalt wird nach Wickbold bestimmt: Probenvorbereitung nach DIN 51408 und Messung per Ionenchromatographie nach DIN EN ISO 10304.
Es wurde jeweils eine Doppelbestimmung durchgeführt und der Mittelwert angegeben.

### Beispiel 3:

Es wurden 5,01 g 3,3'-di-tert-butyl-5,5'-dimethoxy-[1,1'-biphenyl]-2,2'-diyltetrakis(2,4-dimethylphenyl)bisphosphit in einen 250 ml Schlenkkolben eingewogen mit 100 ml entgastem Ethanol und 0,2 ml Pyridin zum Rühren gebracht. Diese Lösung wurde über Nacht bei Raumtemperatur gerührt und am nächsten Morgen für 1 h auf 0 °C abgekühlt. Anschließend wurde die Lösung abfiltriert, mit 5 ml entgastem, kalten Ethanol gewaschen und getrocknet.
Ergebnis: Masse: 4,9 g; Chlorbestimmung: 950 ppm

### Beispiel 4 (erfindungsgemäß):

Es wurden bei Raumtemperatur 54,9 g 3,3'-di-tert-butyl-5,5'-dimethoxy-[1,1'-biphenyl]-2,2'-diyltetrakis(2,4-dimethylphenyl)bisphosphit in einem 2000ml Schlenkkolben mit 800 ml Acetonitril und 1,7 ml Pyridin geben und die entstandene Suspension unter Rühren auf 80 °C erwärmt. Da sich die Suspension nicht löste, wurde die Temperatur auf 83 °C erhöht und es wurden nochmals 100 ml Acetonitril zugegeben. Bei halbstündigem Rühren bei 83 °C klarte die Mischung auf. Die Lösung wurde nachfolgend unter Rühren langsam auf Raumtemperatur (22 °C) abgekühlt, wobei Feststoff ausfiel. Die Suspension wurde über Nacht bei Raumtemperatur gerührt und dann Feststoff und flüssige Phase mittels eines Quarzglasfilters (Fritte, G3) getrennt. Der Feststoff wurde mit 20 ml Acetonitril nachgewaschen und getrocknet.
Ergebnis: Masse 44,0 g, Chlorbestimmung: 92 ppm

### Beispiel 5:

Es wurden 5,2 g 3,3'-di-tert-butyl-5,5'-dimethoxy-[1,1'-biphenyl]-2,2'-diyltetrakis(2,4-dimethylphenyl)bisphosphit in einen 250 ml Schlenkkolben mit 50 ml entgastem Acetonitril zum Rühren gebracht. Diese Suspension wurde über Nacht bei Raumtemperatur gerührt und am nächsten Morgen abfiltriert und getrocknet.
Ergebnis: Masse: 4,9 g; Chlorbestimmung: 595 ppm

### Beispiel 6:

Es wurden 5,01 g 3,3'-di-tert-butyl-5,5'-dimethoxy-[1,1'-biphenyl]-2,2'-diyltetrakis(2,4-dimethylphenyl)bisphosphit in einen 250 ml Schlenkkolben mit 50 ml entgastem Acetonitril und 10 ml Heptan zum Rühren gebracht. Diese Suspension wurde über Nacht bei Raumtemperatur gerührt und am nächsten Morgen abfiltriert und getrocknet.
Ergebnis: Masse: 3,82 g; Chlorbestimmung: 270 ppm

### Beispiel 7 (erfindungsgemäß):

Es wurden bei Raumtemperatur 98,9 g 3,3'-di-tert-butyl-5,5'-dimethoxy-[1,1'-biphenyl]-2,2'-diyltetrakis(2,4-dimethylphenyl)bisphosphit in einem 2000 ml Schlenkkolben mit 1355 ml Acetonitril und 3,0 ml Pyridin geben und die entstandene Suspension unter Rühren auf 80 °C erwärmt. Da sich die Suspension nicht löste, wurde die Temperatur auf 83 °C erhöht und es wurden nochmals 100 ml Acetonitril zugegeben. Bei halbstündigem Rühren bei 83 °C klarte die Mischung auf. Die Lösung wurde nachfolgend unter Rühren langsam auf Raumtemperatur (22 °C) abgekühlt, wobei Feststoff ausfiel. Die Suspension wurde über Nacht bei Raumtemperatur gerührt und dann Feststoff und flüssige Phase mittels eines Quarzglasfilters (Fritte, G3) getrennt. Der Feststoff wurde mit 20 ml Acetonitril nachgewaschen und getrocknet.
Ergebnis: Masse 91,3 g, Chlorbestimmung: 160 ppm

### Beispiel 8 (erfindungsgemäß):

Es wurden bei Raumtemperatur 54,7 g 3,3'-di-tert-butyl-5,5'-dimethoxy-[1,1'-biphenyl]-2,2'-diyltetrakis(2,4-dimethylphenyl)bisphosphit in einem 2000 ml Schlenkkolben mit 800 ml Acetonitril und 1,7 ml Pyridin geben und die entstandene Suspension unter Rühren auf 80 °C erwärmt. Bei halbstündigem Rühren bei 80 °C klarte die Mischung auf. Die Lösung wurde nachfolgend unter Rühren langsam auf Raumtemperatur (22 °C) abgekühlt, wobei Feststoff ausfiel. Die Suspension wurde über Nacht bei Raumtemperatur gerührt und dann Feststoff und flüssige Phase mittels eines Quarzglasfilters (Fritte, G3) getrennt. Der Feststoff wurde mit 20 ml Acetonitril nachgewaschen und getrocknet.
Ergebnis: Masse 43,5 g, Chlorbestimmung: 235 ppm

Die durchgeführten Versuche belegen, dass die gestellten Aufgaben durch das erfindungsgemäße Verfahren gelöst wird.

## Patentansprüche

1. Verfahren zur Reduktion des Chlorgehalts in einem Organobisphosphit der allgemeinen Formel (**I**): 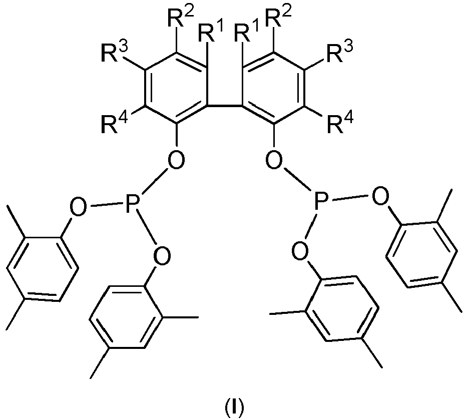 wobei
R¹, R², R³, R⁴ ausgewählt sind aus: -H, -(C₁-C₁₂)-Alkyl,-O-(C₁-C₁₂)-Alkyl, wobei die genannten Alkylgruppen wie folgt substituiert sein können: substituierte -(C₁-C₁₂)-Alkylgruppen und substituierte -O-(C₁-C₁₂)-Gruppen können in Abhängigkeit von ihrer Kettenlänge, einen oder mehrere Substituenten aufweisen; die Substituenten sind unabhängig voneinander ausgewählt unter -(C₃-C₁₂)-Cycloalkyl, -(C₃-C₁₂)-Heterocycloalkyl, -(C₆-C₂₀)-Aryl, Cyano, Formyl, Acyl oder Alkoxycarbonyl,
umfassend die Verfahrensschritte:
a) Lösen des Organobisphosphits in Acetonitril und Triethylamin oder Acetonitril und Pyridin bei einer Temperatur T zwischen Raumtemperatur und dem Siedepunkt der Lösung, wobei das Lösen optional die Abtrennung etwaiger unlöslicher Bestandteile mitumfasst;
b) Rühren der Lösung aus Schritt a) bei der Temperatur aus Schritt a) ± 10 °C,
c) Abkühlen der Lösung aus Schritt b) um mehr als 10 °C unter Bildung einer Suspension oder Emulsion;
d) Halten der Suspension oder Emulsion aus Schritt c) bei der Temperatur aus Schritt c) ± 10 °C,
e) Separieren der Phasen der Suspension oder Emulsion aus Schritt d).

2. Verfahren nach Anspruch 1, **dadurch gekennzeichnet, dass** das Organobisphoshit folgende Formel aufweist:

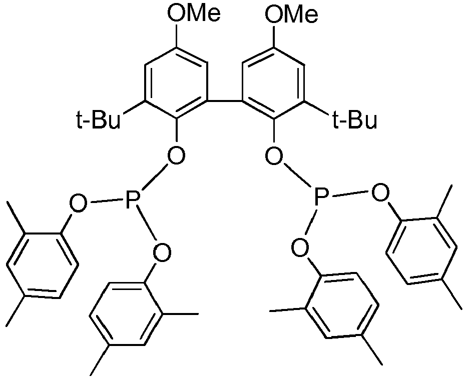

3. Verfahren gemäß einem der Ansprüche 1 bis 2, **dadurch gekennzeichnet, dass** die Temperatur T im Schritt a) weniger als 40 °C, insbesondere weniger als 10 °C unterhalb des Siedepunktes der Lösung liegt und mit Vorzug im Schritt a) eine gesättigte Lösung hergestellt wird.

4. Verfahren gemäß einem der Ansprüche 1 bis 3, **dadurch gekennzeichnet, dass** im Schritt b) die Lösung 10 Minuten bis 12 Stunden, vorzugsweise 20 Minuten bis 2 Stunden gerührt wird, wobei die Temperatur vorzugsweise um weniger als ± 5 °C von der Temperatur T im Schritt a) abweicht.

5. Verfahren gemäß einem der Ansprüche 1 bis 4, **dadurch gekennzeichnet, dass** im Schritt a) ein Amin in einem Molverhältnis von Amin zum eingesetzten Roh-Organobiphosphit von 1:1 bis 1:6 eingesetzt wird.

6. Verfahren gemäß einem der Ansprüche 1 bis 5, **dadurch gekennzeichnet, dass** die Lösung zur Bildung einer Suspension oder Emulsion im Schritt c) auf -15 °C bis 35 °C, insbesondere auf 0 °C bis 30°C abgekühlt wird.

7. Verfahren gemäß einem der Ansprüche 1 bis 6, **dadurch gekennzeichnet, dass** in einem an den Schritt e) anschließenden Schritt, der Feststoff der Suspension bzw. die untere Phase der Emulsion getrocknet wird.

8. Verfahren gemäß einem der Ansprüche 1 bis 7, **dadurch gekennzeichnet, dass** der Gesamtchlorgehalt des gereinigten Organobisphosphits zwischen 10 ppm und 10.000 ppm, vorzugsweise zwischen 10 ppm und 1.000 ppm beträgt, wobei die Einheit ppm sich auf das Gewicht bezieht.

## Claims

1. Process for reducing the chlorine content in an organobisphosphite of the general formula (I): 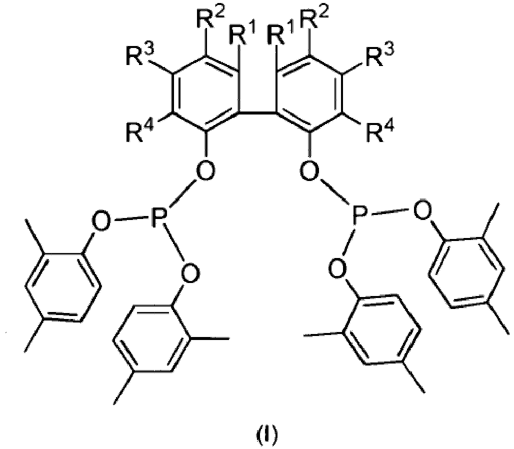 where
R¹, R², R³ and R⁴ are selected from: -H, - (C₁-C₁₂) -alkyl, -O-(C₁-C₁₂)-alkyl, wherein the alkyl groups mentioned may be substituted as follows: substituted -(C₁-C₁₂)-alkyl groups and substituted -O-(C₁-C₁₂)- groups may have one or more substituents, depending on their chain length; the substituents are selected independently of one another from -(C₃-C₁₂) -cycloalkyl, -(C₃-C₁₂) -heterocyclo-alkyl, -(C₆-C₂₀) -aryl, cyano, formyl, acyl or alkoxycarbonyl,
comprising the following process steps:
a) dissolving the organobisphosphite in acetonitrile and triethylamine or acetonitrile and pyridine at a temperature T between room temperature and the boiling point of the solution, the dissolving optionally encompassing the removal of any insoluble constituents;
b) stirring the solution from step a) at the temperature from step a) ± 10°C,
c) cooling the solution from step b) by more than 10°C to form a suspension or emulsion;
d) holding the suspension or emulsion from step c) at the temperature from step c) ± 10°C,
e) separating the phases of the suspension or emulsion from step d).

2. Process according to Claim 1, **characterized in that** the organobisphosphite has the following formula:

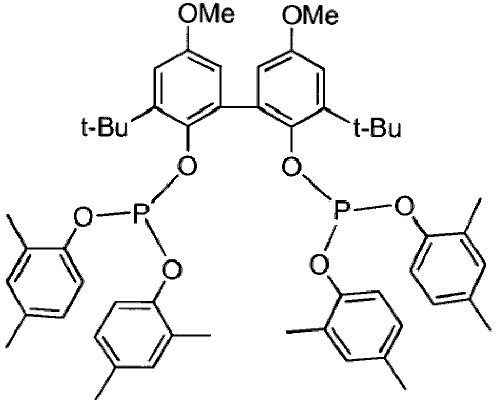

3. Process according to either of Claims 1 and 2, **characterized in that** the temperature T in step a) is less than 40°C, more particularly less than 10°C, below the boiling point of the solution and with preference in step a) a saturated solution is prepared.

4. Process according to any of Claims 1 to 3, **characterized in that** in step b) the solution is stirred for 10 minutes to 12 hours, preferably 20 minutes to 2 hours, and the temperature is preferably different by less than ± 5°C from the temperature T in step a).

5. Process according to any of Claims 1 to 4, **characterized in that** in step a) an amine is used in a molar ratio of amine to the crude organobiphosphite used of 1:1 to 1:6.

6. Process according to any of Claims 1 to 5, **characterized in that** the solution for forming a suspension or emulsion in step c) is cooled to -15°C to 35°C, more particularly to 0°C to 30°C.

7. Process according to any of Claims 1 to 6, **characterized in that** in a step subsequent to step e), the solid in the suspension, or the lower phase of the emulsion, is dried.

8. Process according to any of Claims 1 to 7, **characterized in that** the total chlorine content of the purified organobisphosphite is between 10 ppm and 10 000 ppm, preferably between 10 ppm and 1000 ppm, with the ppm unit being based on the weight.

## Revendications

1. Procédé de réduction de la teneur en chlore dans un organobisphosphite de formule générale (I) : 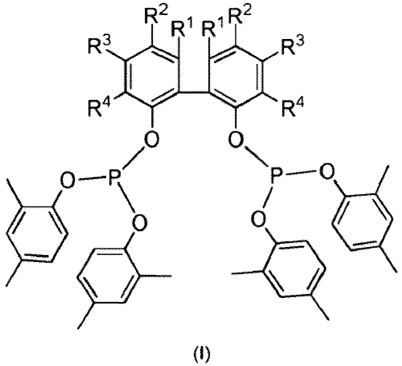 dans laquelle
R¹, R², R³, R⁴ sont choisis parmi : -H, -alkyle en (C₁-C₁₂), -O-alkyle en (C₁-C₁₂), les groupes alkyle mentionnés pouvant être substitués de la manière suivante : les groupes alkyle en (C₁-C₁₂) substitués et les groupes -O-(C₁-C₁₂) substitués peuvent comprendre, en fonction de leur longueur de chaîne, un ou plusieurs substituants ; les substituants sont choisis indépendamment les uns des autres parmi -cycloalkyle en (C₃-C₁₂), -hétérocycloalkyle en (C₃-C₁₂), -aryle en (C₆-C₂₀), cyano, formyle, acyle ou alcoxycarbonyle,
comprenant les étapes de procédé suivantes :
a) la dissolution de l'organobisphosphite dans de l'acétonitrile et de la triéthylamine ou de l' acétonitrile et de la pyridine à une température T comprise entre la température ambiante et le point d'ébullition de la solution, la dissolution comprenant éventuellement la séparation d'éventuels constituants insolubles ;
b) l'agitation de la solution de l'étape a) à la température de l'étape a) ± 10 °C,
c) le refroidissement de la solution de l'étape b) de plus de 10 °C avec formation d'une suspension ou d'une émulsion ;
d) le maintien de la suspension ou de l'émulsion de l'étape c) à la température de l'étape c) ± 10 °C,
e) la séparation des phases de la suspension ou de l'émulsion de l'étape d).

2. Procédé selon la revendication 1, **caractérisé en ce que** l'organobisphosphite présente la formule suivante :

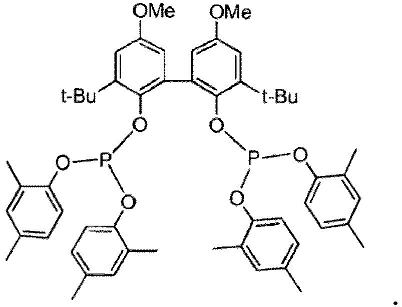

3. Procédé selon l'une quelconque des revendications 1 à 2, **caractérisé en ce que** la température T à l'étape a) se situe moins de 40 °C, notamment moins de 10 °C, en dessous du point d'ébullition de la solution, et une solution saturée est de préférence fabriquée à l'étape a) .

4. Procédé selon l'une quelconque des revendications 1 à 3, **caractérisé en ce qu'**à l'étape b), la solution est agitée pendant 10 minutes à 12 heures, de préférence 20 minutes à 2 heures, la température déviant de préférence de moins de ± 5 °C de la température T à l'étape a).

5. Procédé selon l'une quelconque des revendications 1 à 4, **caractérisé en ce qu'**à l'étape a), une amine est utilisée en un rapport molaire entre l'amine et l'organobiphosphite brut utilisé de 1:1 à 1:6.

6. Procédé selon l'une quelconque des revendications 1 à 5, **caractérisé en ce que**, pour la formation d'une suspension ou d'une émulsion à l'étape c), la solution est refroidie à une température de -15 °C à 35 °C, notamment à une température de 0 °C à 30 °C.

7. Procédé selon l'une quelconque des revendications 1 à 6, **caractérisé en ce que**, lors d'une étape suivant l'étape e), le solide de la suspension ou la phase inférieure de l'émulsion est séché.

8. Procédé selon l'une quelconque des revendications 1 à 7, **caractérisé en ce que** la teneur totale en chlore de l'organobisphosphite purifié est comprise entre 10 ppm et 10 000 ppm, de préférence entre 10 ppm et 1 000 ppm, l'unité ppm se rapportant au poids.
